# EUROPEAN PATENT SPECIFICATION

(11) **EP 1 951 920 B1**
(45) Date of publication and mention of the grant of the patent: **20.04.2011**
(21) Application number: 06721579.8
(22) Date of filing: 07.02.2006
(51) Int. Cl.: C22B 23/00, C22B 3/08, C22B 21/00, C22B 9/00, C22B 3/06, C25C 1/06, C25C 1/08

(54) **THE COMBINED LEACHING PROCESS**
KOMBINIERTES AUSLAUGUNGSVERFAHREN
PROCEDE DE LIXIVIATION COMBINE

(30) Priority: 10.11.2005 BR PI0505544
(43) Date of publication of application: 06.08.2008
(73) Proprietor: Companhia Vale Do Rio Doce, CEP-33030-970 Minas Gerais (BR)
(72) Inventor: COSTA, Renato de Souza, 31170-220 - Minas Gerais (BR); MENDES, Flávia, Dutra, 31170-220 Minas Gerais (BR)
(74) Representative: Teipel, Stephan
(86) International application number: PCT/BR2006/000017
(87) International publication number: WO 2007/053919

(56) References cited:
- US-A- 3 804 613
- US-A- 4 410 498
- US-A- 4 610 721
- US-A1- 2005 226 797
- US-B1- 6 379 637
- US-B1- 6 391 089

## Description

The purpose of this report is to describe a combined leaching process, that is, a dissolution process of soluble constituents of a given nickel ore or concentrate by the action of acids such as, but not limiting to, base, and most particularly the combined execution of two or more serial leaching phases thus making it possible to decrease the consumption of the reagent used for leaching, as this prevents leaching operations from being cost ineffective.

As expert technicians know very well, lateritic ores can be treated by means of hydrometallurgical route where sulfuric leaching is the traditional process used for extracting both nickel and cobalt. This ore is Fe-rich, also contains Al, Mn and Si and the percentage of Ni ranges from 0.8% to 1.4% and Co varies from 0.05% to 0.2%. Depending of ore grain size, two types of leaching can be used, namely, pressure acid leaching (HPAL) and atmospheric leaching (AL).

Pressure acid leaching (HPAL) occurs at high temperatures in acid corrosion resistant titanium autoclaves. In this case the ore to be fed shall have fine grain size and an high Ni grade, thus making it necessary the use of such process. Processing the ore by screening and classification can enrich nickel level by approximately 100%. In operational temperature balance vapor pressure ranges from 33-55 atm, iron and aluminum (trivalent form) are initially dissolved, followed by a precipitation in the autoclave in the form of hematite and alunite, respectively, with the ensuing generation of acid.

Atmospheric leaching (AL) is carried out at lower temperatures than acid pressure leaching and under atmospheric pressure. Intermediate ore size fraction has a lower Ni grade as compared to fine fraction grades. Therefore, due to economical reasons the use of pressure leaching (HPAL) is not recommended. On the other hand, atmospheric leaching (AL) may be suitable since it requires fewer investments but the consumption of acid is higher with greater iron and aluminum solubilization.

Particularly in the case of atmospheric leaching (AL), acid consumption depends heavily on the presence of consuming elements such as iron, aluminum and magnesium in the ore, which are fairly dissolved and remain in solution in the form of sulphates. Therefore, the higher the grade of such elements in the ore, the higher the consumption of acid for the operation.

Although being largely used, independent leaching techniques can be cost ineffective mainly in the case of atmospheric leaching (AL) by virtue of increased sulfuric acid consumption as it leaches preferably iron, aluminum, magnesium, manganese and nickel. In other words, for Ni extractions higher than 90% it requires the addition of a higher quantity of acid to solubilize remaining consuming elements. Whatever leaching process is used, acid consumption can become a crucial variable that makes the process unviable.

Another inconvenient as far as leaching processes are concerned is the liquor derived from leaching, which contains a number of solubilized metals (Fe, Mg, Al, Mn), and increases both complexity and cost of a late purifying phase.

Document US 4,410,498 discloses an acid leaching of nickel from serpentinic laterite ores process. One of the embodiments of this process comprises two teaching steps. In this case, the lateritic ore is treated by conventional methods of screening and size classification. The fine fraction (limonitic ore) is subjected to a conventional sulphuric acid pressure leaching to retain most of the iron, aluminum and siliceous componds in the residue and to dissolve nickel and cobalt. The serpentinic fraction separated from the lomonitic fraction at the beginning of the process is comminuted, slurried with water and mixed with the slurry obtained in the high pressure high sulphuric acid leaching step of the limonitic fraction. This process uses two different leaching phases for two different sizes of ore, therefore, it is not a combined leaching process. Further, in this case the high pressure leach precedes the atmospheric leach reaching different results.

Document US 3,804,613 discloses an ore conditioning process for the efficient recovery of nickel from relatively high magnesium containing oxidic nickel ores. An atmospheric leach is disclosed, however, in this process the leachate of the atmospheric leach is not used in the high pressure leach, therefore, this process does not use a combined leaching process.

This patent request proposes the use of a combined teaching where the extraction process is carried out in two or more serial phases aimed at providing nickel recovery of the Intermediate size fraction at an early phase of atmospheric leaching, where a significant portion of nickel is distributed with a mean grade placed around 1% Ni, as well as to bring the free acidity generated during atmospheric leaching (AL) to the following pressure acid leaching phase (HPAL).

Another purpose of this invention is the reduction in acid consumption during the pressure acid leaching (HPAL) phase given that the hydrolysis process occurs in the autoclave with the advantageous precipitation of iron and aluminum in the form of hematite and alunite, as well as acid regeneration made available through operational conditions. Iron and aluminum, dissolved during the first leaching phase (AL) in the form of sulphates in solution are fed into the second leaching phase (HPAL) and are considered the main source for acid regeneration through hydrolysis reaction. This procedure has a direct impact on acid reduction, which is added during the pressure acid leaching phase in autoclave, with no interference in the results of the process.

These invention's objectives and advantages, among others, can be achieved using two or more serial leaching phases.

This invention is further discussed herein based on the attached drawings in which:
Figure 1 shows a schematic pressure leaching (HPAL) drawing;
Figure 2 shows a schematic atmospheric leaching (AL) drawing;
Figure 3 shows a combined leaching schematic drawing and

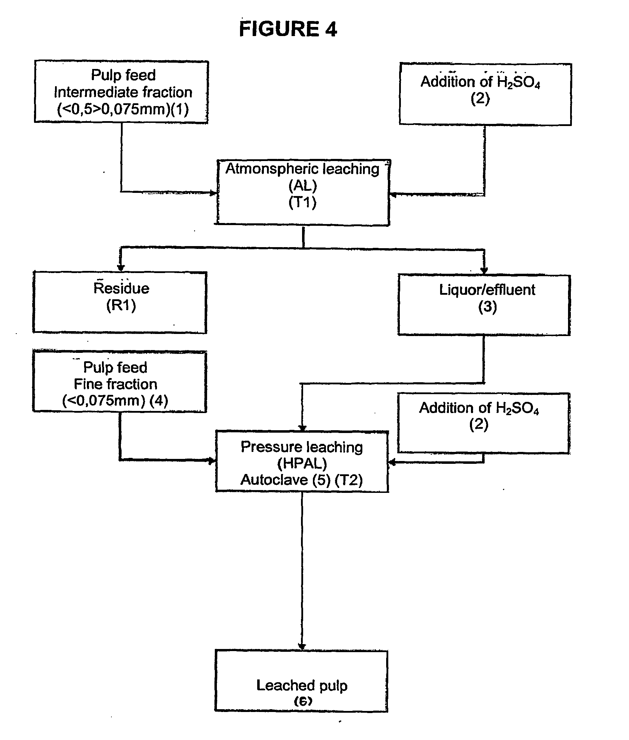

Figure 4 shows a combined leaching process flowchart.

As shown in these figures, the combined leaching process, which is the object of this present invention, comprises the execution of serial leaching phases. Firstly, the intermediate fraction (<0.5>0.075mm) (1) is submitted to atmospheric leaching (AL). During this phase, there is a high consumption of sulfuric acid (2) because of the solubilization of consuming elements such as Fe, Al and Mg, resulting in an effluent (3) with a high concentration of dissolved iron and aluminum and high residual acidity. This effluent (3), in its present form, is fed into the next pressure acid leaching (HPAL) of the fine size fraction (<0.075mm) (4). The purpose of this approach is to reduce the quantity of sulfuric acid (2) to be added

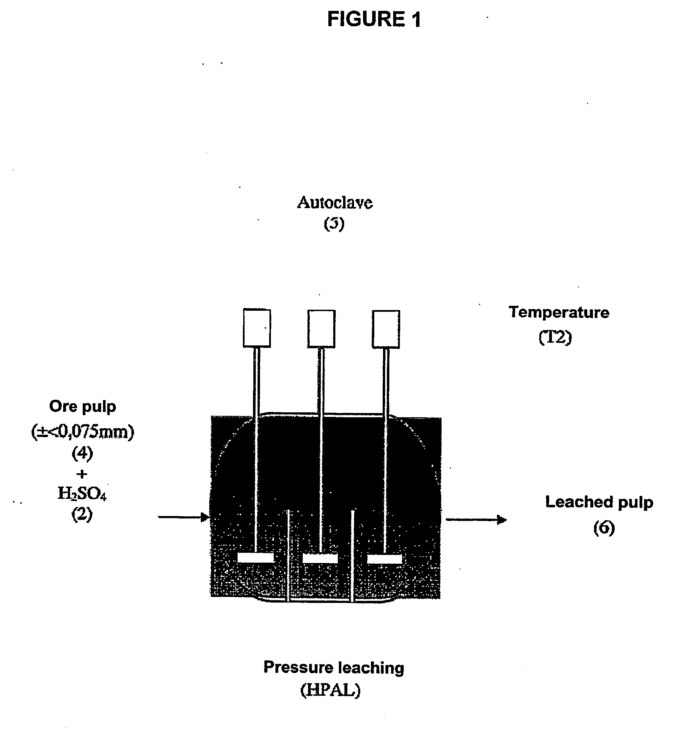

As shown in figure 1, pressure leaching (HPAL) occurs when the effluent from the first leaching (3) and the ore and sulfuric acid (2) fine fraction pulp (<0.075mm) (4) feed the autoclave (5) with an approximate proportion of 34% solids. Leaching takes place at high temperatures (T2) (250°C), with agitation of 500 rpm for 1.25 hours. Gross sulfuric acid consumption (2) depends on the consuming elements grade in the ore and extraction is greater than 95% Ni. Dissolved iron and aluminum are submitted to hydrolysis in the autoclave (5) and are precipitated in the form of hematite and ghoetite, respectively, regenerating sulfuric acid (2).

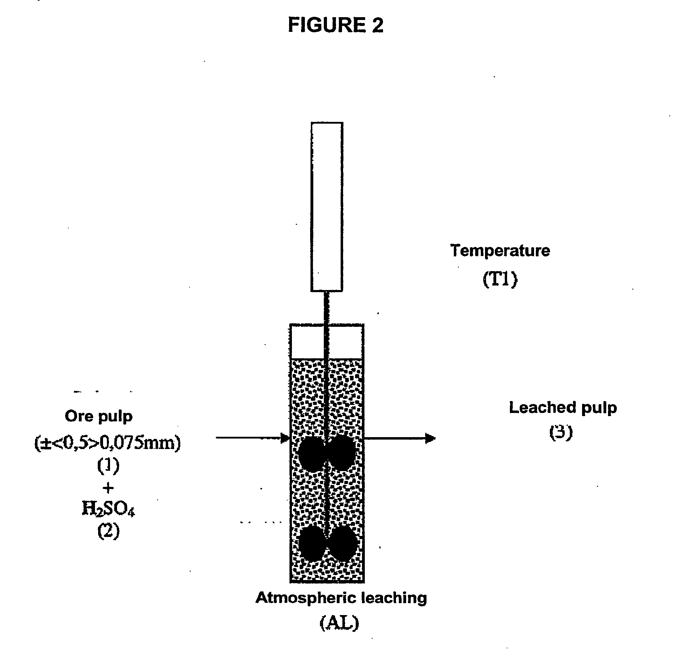

As shown in figure 2, atmospheric leaching (AL) takes place when the ore intermediate size fraction pulp (<0.5mm>0.075mm) (1), together with sulfuric acid (2) is leached at temperatures (T1) of approximately 95°C with 33% solids with agitation of 130 rpm for 6 hours. Ni extraction is greater than 90%, but, sulfuric acid consumption (2) is very high because of high iron and aluminum dissolution In solution.

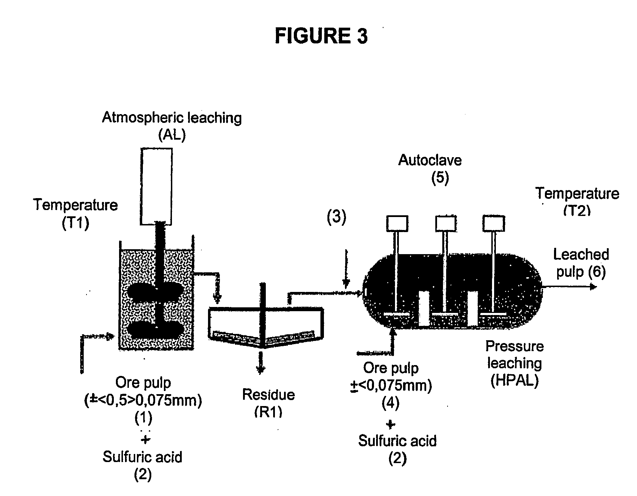

As shown in figure 3 and flowchart 4, combined serial leaching process comprises atmospheric leaching (AL) followed by pressure leaching (HPAL). The intermediate size fraction pulp (<0.5>0.075mm) (1) is submitted to atmospheric leaching with sulfuric acid (2), at a temperature (T1) of 95°C, agitation of 130 rpm and 33% solids for 6 hours. The effluent (3) from the first leaching (AL), together with both sulfuric acid (2) and fine fraction (<0.075mm) (4) feed the autoclave (5) for pressure leaching (HPAL) at a temperature of (T2) 250°C, agitation of 500 rpm, pressure at 650 psi and 34% solids for 75 minutes.

The effluent (3) from atmospheric leaching (AL) shows free acidity that is used in pressure leaching (HPAL). Iron sulphate (III) and aluminum (III) hydrolysis reaction in the autoclave cause Fe precipitation in the form of hematite and Al in the form of alunite, regenerating sulfuric acid (2). Leaching mechanisms during the atmospheric phase (AL) and iron and aluminum further precipitation mechanisms during the pressure phase (HPAL) can be described as follows:

Ghoetite dissolution in atmospheric leaching (AL)

2FeOOH + 3H₂SO₄ → Fe₂(SO₄)₃ + 4H₂O

Hematite formation and sulfuric acid generation (2) take place during pressure leaching (HPAL) by the hydrolysis process.

Fe₂(SO₄)₃ + 3H₂O → Fe₂O₃(s) + 3H₂SO₄

Bhoemite dissolution in atmospheric leaching (AL)

2AIOOH + 3H₂SO₄ → Al₂(SO₄)₃ + 4H₂O

Alunite formation and sulfuric acid generation take place during pressure leaching (HPAL) by hydrolysis process.

3AL₂(SO₄)₃ + 14H₂O → 2(H₃O)Al₃(SO₄)₂(OH)₆(s) + 5H₂SO₄

Because free acidity is reused and sulfuric acid is regenerated (2) from iron sulphate (III) and aluminum (III) in solution, the sulfuric acid volume (2) to be added to pressure leaching (HPAL) was reduced, being equivalent to an average of only 60% of gross sulfuric acid consumption (2).

In other words, there is a considerable reduction of the order of 40% in the added sulfuric acid (2) with combined leaching, without prejudice to nickel extraction. This reduction in the addition of sulfuric acid (2) has a direct impact on the economical feasibility of a given project. The use of the effluent solution (3) from the atmospheric leaching (AL), with high free acidity and high iron and aluminum concentration in solution, in the pressure leaching (HPAL), is responsible for a reduction of 40% in the addition of sulfuric acid (2) in this phase by virtue of the hydrolysis process in which dissolved iron and aluminum can precipitate and regenerate sulfuric acid (2).

In this request we have referred, but not limiting to, certain operational conditions such as temperature, solid %, time and agitation. We should point out, therefore, that these conditions can vary during each serial leaching phase, without any prejudice to the process final results.

It should pointed out, though, that the preferable operational process herein described and illustrated is liable to feasible alterations without any deviation from the scope of the present invention.

## Claims

1. A combined leaching process, comprising a dissolution process of soluble constituents of ar nickel pre by a combined execution of two or more serial leaching phases, **characterized in that** a first phase comprises atmospheric leaching (AL) of an ore pulp having an intermediate size fraction from about 0.075 mm to about 0.5 mm, and producing an effluent comprising a concentration of dissolved iron and aluminum, and nickel and cobalt, and residual acidity, and wherein a second phase comprises pressure leaching (HPAL) of a fine fraction size under 0.075 mm, wherein the effluent of the first phase is also fed.

2. The combined leaching process according to claim 1, **characterized by** the fact that in the first combined leaching phase the intermediate size fraction of the ore is placed together with a sulfuric acid solution and is submitted to atmospheric leaching (AL) at temperatures (T1) of 95°C with 33% solids for an agitation of 130 rpm for 6 hours, during which Ni extraction is greater than 90%, where a high dissolution of both iron and aluminum also occurs, which remain in the solution.

3. The combined leaching process according to claim 1, **characterized by** the fact that during the second combined leaching phase the effluent of the first leaching (AL), together with sulfuric acid and with fine fraction pulp (< 0.075 mm) feed an autoclave for the realization of pressure leaching (HPAL) at a temperature (T2) of 250°C, with agitation of 500 rpm, pressure of 650 psi and with 34% solids for 75 minutes.

4. The combined leaching process according to claim 3, **characterized by** the fact that the said effluent from atmospheric leaching (AL) shows free acidity and is reused in pressure leaching (HPAL) and by the fact that iron (III) and aluminum (III) sulphate hydrolysis reaction takes place causing Fe precipitation in the form of hematite and Al in the form of alunite, thus regenerating sulfuric acid.

5. The combined leaching process according to claim 1, **characterized by** comprising a reduction of sulfuric acid volume to be added to the pressure leaching (HPAL).

6. The combined leaching process according to claim 1, **characterized by** the fact that the sulfuric acid volume to be added to the pressure leaching (HPAL) is reduced by 40%.

## Patentansprüche

1. Kombiniertes Auslaugverfahren, umfassend ein Lösungsverfahren löslicher Bestandteile eines Nickelerzes durch eine kombinierte Durchführung von zwei oder mehr aufeinanderfolgenden Auslaugphasen, **dadurch gekennzeichnet, dass** eine erste Phase atmosphärisches Auslaugen (AL) einer Erztrübe umfasst, die eine Zwischengrößenfraktion von etwa 0,075 mm bis etwa 0,5 mm aufweist und ein Abwasser erzeugt, das eine Konzentration an gelöstem Eisen und Aluminium und Nickel und Cobalt und restliche Azidität umfasst, und wobei eine zweite Phase Drucklaugung (HPAL) einer Feingatfraktion unter 0,075 mm umfasst, wobei das Abwasser der ersten Phase auch eingespeist wird.

2. Kombiniertes Auslaugverfahren nach Anspruch 1, **gekennzeichnet durch** die Tatsache, dass in der ersten kombinierten Auslaugphase die Zwischengrößenfraktion des Erzes zusammen mit einer Schwefelsäurelösung eingebracht und atmosphärischem Auslaugen (AL) bei Temperaturen (T1) von 95 °C mit einem Feststoffgehalt von 33 % unter Rühren mit 130 U/min für 6 Stunden ausgesetzt wird, während denen die Ni-Extraktion größer als 90 % ist, wobei auch eine hohe Auflösung von sowohl Eisen als auch Aluminium auftritt, die in der Lösung verbleiben.

3. Kombiniertes Auslaugverfahren nach Anspruch 1, **gekennzeichnet durch** die Tatsache, dass während der zweiten kombinierten Auslaugphase das Abwasser der ersten Auslaugung (AL) zusammen mit Schwefelsäure und mit der Feingutsuspension (< 0,075 mm) in einen Autoklaven für die Realisierung der Drucklaugung (HPAL) bei einer Temperatur (T2) von 250 °C unter Rühren mit 500 U/min, einem Druck von 650 psi und mit einem Feststoffgehalt von 34 % für 75 Minuten eingespeist wird.

4. Kombiniertes Auslaugverfahren nach Anspruch 3, **gekennzeichnet durch** die Tatsache, dass das Abwasser aus dem atmosphärischen Auslaugen (AL) eine freie Azidität zeigt und bei der Drucklaugung (HPAL) wiederverwendet wird, und **durch** die Tatsache, dass eine Eisen(III)-und Aluminium(III)sulfathydrolysereaktion stattfindet, die die Fe-Ausfällung in Form von
Hämatit und Al in Form von Alunit verursacht, wodurch folglich Schwefelsäure wiedergewonnen wird.

5. Kombiniertes Auslaugverfahren nach Anspruch 1, **dadurch gekennzeichnet, dass** es eine Reduktion des dem Drucklaugen (HPAL) hinzuzufügenden Schwefelsäurevolumens umfasst.

6. Kombiniertes Auslaugverfahren nach Anspruch 1, **gekennzeichnet durch** die Tatsache, dass das dem Drucklaugen (HPAL) hinzuzufügende Schwefelsäurevolumen um 40 % reduziert wird.

## Revendications

1. Procédé de lixiviation combiné, comprenant un procédé de dissolution de constituants solubles d'un minerai de nickel par une exécution combinée de deux phases de lixiviation en série ou plus, **caractérisé en ce qu'**une première phase comprend une lixiviation atmosphérique (AL) d'une pulpe de minerai ayant une fraction de tailles intermédiaires d'environ 0,075 mm à environ 0,5 mm, et la production d'un effluent comprenant une concentration de fer et d'aluminium, et de nickel et de cobalt dissous, et une acidité résiduelle, et dans lequel une seconde phase comprend une lixiviation sous pression (HPAL) d'une fraction de fines tailles en dessous de 0,075 mm, dans lequel l'effluent de la première phase est également chargé.

2. Procédé de lixiviation combiné selon la revendication 1, **caractérisé en ce que**, dans la première phase de lixiviation combinée, la fraction de tailles intermédiaires du minerai est placée conjointement avec une solution d'acide sulfurique et est soumise à une lixiviation atmosphérique (AL) à une température (T1) de 95 °C avec 33 % de solides pour une agitation de 130 tr/min pendant 6 heures, pendant lesquelles l'extraction de Ni est supérieure à 90 %, où une
dissolution importante à la fois du fer et de l'aluminium se produit, lesquels restent dans la solution.

3. Procédé de lixiviation combiné selon la revendication 1, **caractérisé en ce que**, pendant la seconde phase de lixiviation combinée, l'effluent de la première lixiviation (AL), conjointement avec de l'acide sulfurique et avec une pâte de fraction fine (< 0,075 mm) charge un autoclave pour la réalisation d'une lixiviation sous pression (HPAL) à une température (T2) de 250 °C, avec une agitation de 500 tr/min, une pression de 650 psi et 34 % de solides pendant 75 minutes.

4. Procédé de lixiviation combiné selon la revendication 3, **caractérisé en ce que** ledit effluent provenant de la lixiviation atmosphérique (AL) présente une acidité libre et est réutilisé dans la lixiviation sous pression (HPAL) et **en ce que** la réaction d'hydrolyse de sulfate de fer (III) et d'aluminium (III) a lieu en entraînant la précipitation du Fe sous la forme d'hématite et de l'AI sous la forme d'alunite, régénérant ainsi l'acide sulfurique.

5. Procédé de lixiviation combiné selon la revendication 1, **caractérisé en ce qu'**il comprend une réduction du volume d'acide sulfurique à ajouter à la lixiviation sous pression (HPAL).

6. Procédé de lixiviation combiné selon la revendication 1, **caractérisé en ce que** le volume d'acide sulfurique à ajouter à la lixiviation sous pression (HPAL) est réduit de 40 %.
